# EUROPÄISCHE PATENTSCHRIFT

(11) **EP 1 145 410 B1**
(45) Veröffentlichungstag und Bekanntmachung des Hinweises auf die Patenterteilung: **02.04.2003**
(21) Anmeldenummer: 00910596.6
(22) Anmeldetag: 20.01.2000
(51) Int. Cl.: H02K 21/24

(54) **SCHEIBENLÄUFERMOTOR MIT LAGERVORSPANNUNG**
DISK MOTOR WITH BEARING PRESTRESSING FEATURE
MOTEUR A INDUIT EN DISQUE AVEC PRECONTRAINTE DU ROULEMENT A BILLES

(30) Priorität: 22.01.1999 DE 19902371
(43) Veröffentlichungstag der Anmeldung: 17.10.2001
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); STÖLTING, Hans-Dieter, D-30823 Garbsen (DE); MICHEL, Frank, D-55268 Nieder-Olm (DE); NIENHAUS, Matthias, D-55128 Mainz (DE); KLEEN, Stephan, D-55118 Mainz (DE)
(74) Vertreter: Fuchs Mehler Weiss & Fritzsche
(86) Internationale Anmeldenummer: EP0000421
(87) Internationale Veröffentlichungsnummer: WO00044082

(56) Entgegenhaltungen:
- DE-U- 29 705 634
- US-A- 4 164 690
- US-A- 4 922 162
- PATENT ABSTRACTS OF JAPAN vol. 1998, no. 11, 30. September 1998 (1998-09-30) & JP 10 174406 A (SANYO ELECTRIC CO LTD;KUMAGAYA SEIMITSU KK), 26. Juni 1998 (1998-06-26)

## Beschreibung

Die Erfindung betrifft einen Scheibenläufermotor mit einer mit Permanentmagneten versehenen, drehbar gelagerten Läuferscheibe und mit einem Stator, der eine Statorplatte umfaßt, die mit Spulen bestückt ist.

Die JP-A-10 174 406 offenbart einen derartigen Scheibenläufermotor.

Solche Scheibenläufermotoren werden beispielsweise als Plattenteller-Direktantriebe eingesetzt. Eine prinzipielle Erläuterung von Scheibenläufermotoren findet sich beispielsweise in H.-D. Stölting, A. Beisse, Elektrische Kleinmaschinen, Verlag Teubner, 1987, Seite 169ff und Seite 186ff.

Die DE 34 25 805 A1 beschreibt einen Gleichstrommotor in Scheibenläuferbauweise zur Rotation eines Spiegels. Der Stator besteht aus einem Spulenträger und einem darauf befestigten Statorflansch, der den Rotor vollständig umschließt und vor äußeren Einflüssen schützt. Der Rotor besitzt eine an dem Spiegel befestigte Achse, die am unteren Ende einen Magnetträger aufweist, der mit einem zweipoligen Permanentmagnetring bestückt ist. Die Lagerung der Rotorachse erfolgt mittels zweier Kugellager, die im Statorflansch befestigt sind. Um das axiale Spiel zu minimieren, müssen die Außenringe des Kugellagers gegen die jeweiligen Innenringe verspannt werden. Dies wird dadurch gelöst, daß der Statorflansch die beiden übereinander angeordneten Außenringe fixiert, während die dazugehörigen Innenringe durch die Abmessungen des Rotors in entgegengesetzter Richtung gespannt werden. Diese Anordnung hat jedoch den Nachteil, daß zwei im Abstand übereinander angeordnete Kugellager benötigt werden. Um die Bauhöhe zu reduzieren, ist es jedoch wünschenswert, lediglich eine Lagerstelle vorzusehen.

Die Scheibenläufermotoren sind zur Erzielung hoher Drehmomente meist mit einem weichmagnetischen Rückschluß versehen, worunter man einen geschlossenen magnetischen Kreis zur Erhöhung der Flußdichte im Luftspalt versteht. Die magnetischen Feldlinien werden in ferromagnetischem Material geführt, wobei allenfalls geringe Luftspalte zwischen den einzelnen Bauteilen in Kauf genommen werden. Dies wird - wie beispielsweise in Stölting/Beisse erläutert wird - dadurch realisiert, daß die Läuferscheibe am Außenumfang mit einer Ringschürze und einem daran befestigten Rückschlußring versehen ist, mit dem die Flachspulen des Stators untergriffen werden. Die magnetischen Feldlinien verlaufen ausgehend vom Permanentmagneten durch die Läuferscheibe nach außen, durch die Ringschürze nach unten und durch den Rückschlußring und den Wirkungsbereich der Spule zum Permanentmagneten zurück (s. Stölting/Beisse, S. 186).

Ein Scheibenläufermotor ähnlicher Bauart ist beispielsweise aus dem deutschen Gebrauchsmuster DE-GM-75 419 11 bekannt. Die Läuferscheibe weist in ihrer Mitte ein glockenförmiges Distanzstück auf, an der der Rückschlußring gehalten ist. Das Rotorgehäuse weist ein Lagerrohr auf, in dem zwei Sinterlager und dazwischen ein zur Speicherung von Öl dienender Filzring angeordnet sind, die zur radialen Lagerung der Rotorwelle dienen. Zur axialen Lagerung weist das Gehäuse eine Bodenplatte mit einem rohrartigen Fortsatz auf, an dessen unterem Rand ein Trageglied für ein Axiallager der Rotorwelle befestigt ist. Die Rotorwelle ist an der unteren Stirnseite ballig ausgebildet und sitzt auf dem Achsiallager auf. Die Bauhöhe dieses Motors ist durch das Vorsehen von insgesamt drei Lagern deutlich größer als die des in der DE 34 25 805 A1 beschriebenen Motors.

Eine weitere Variante eines Scheibenläufermotors mit zwei Kugellagern und magnetischem Rückschlußring wird in der DE 35 28 303 A1 beschrieben, wobei eine geringe Bauhöhe angestrebt wird. Die Läuferscheibe besitzt eine rohrförmige Nabe, in der zwei Kugellager angeordnet sind, die auf einem auf der Statorplatte befestigten Achsstumpf beabstandet zueinander fixiert sind. Außerdem besitzt die Läuferscheibe an ihrem Außenumfang lediglich eine Ringschürze, die in geringem Abstand über der Statorplatte endet. Die Aufgabe des Rückschlußrings übernimmt die Statorplatte, die aus einem entsprechenden ferromagnetischen Material hergestellt sein muß.

Dieser Scheibenläufermotor besitzt folgende Nachteile: zum einen sind zwei Kugellager vorgesehen, was mit zusätzlichen Montagekosten verbunden ist und zum anderen verläuft der Rückschlußkreis nicht ausschließlich durch den Wirkungsbereich der Spulen, so daß er nicht vollständig zur Drehmomenterzeugung beiträgt. Dadurch, daß die gesamte Statorplatte am magnetischen Rückschluß beteiligt ist, entstehen erhebliche Wirbelströme, die eine Bremswirkung auf die Läuferscheibe ausüben. Außerdem wird die Läuferscheibe sowohl im Bereich der Schürze als auch im Bereich der Nabe angezogen, so daß sehr große Kräfte auf die Läuferscheibe und somit auf die Lager ausgeübt werden, was zu erheblichen Lagerbelastungen und u.U. zu einem vorzeitigen Ausfall der Lager führen kann. Außerdem muß die gesamte Lagerplatte aus ferromagnetischem Material gefertigt sein und denselben Durchmesser aufweisen, wie die Läuferscheibe. Dies führt zu einem hohen Gewicht des gesamten Motors.

Aufgabe der Erfindung ist es, einen Scheibenläufermotor bereitzustellen, der sich durch eine flache Bauweise und große Laufruhe sowie großem Drehmoment auszeichnet.

Die Aufgabe wird dadurch gelöst, daß auf der Statorplatte eine ringförmige Vorspannungseinrichtung aus weichmagnetischem Material derart konzentrisch angeordnet ist, daß sich mindestens ein Abschnitt der Vorspannungseinrichtung in axialer Richtung unterhalb des Spulenfensters der Spulen befindet.

Der Vorteil der Erfindung besteht darin, daß aufgrund der magnetischen Vorspannung das axiale Spiel der Läuferscheibenlagerung vermieden werden kann, so daß eine entsprechend große Laufruhe auch dann erreicht wird, wenn nur ein einziges Lager, beispielsweise ein Kugellager oder ein Gleitlager verwendet wird. Wenn lediglich ein Lager ausreicht, wird die Bauhöhe deutlich verringert, wobei für ein Lager immer noch so viel Platz zur Verfügung steht, daß handelsübliche Kugellager zum Einsatz kommen können.

Wenn der Scheibenläufermotor als Mikromotor ausgebildet ist, werden unter handelsüblichen Lagern solche verstanden, die beispielsweise eine Bauhöhe von 1 mm und mehr aufweisen können. Handelsübliche Lager haben den Vorteil, daß die Herstellungskosten insgesamt niedriger werden als wenn zwei Speziallager mit extrem geringer Bauhöhe verwendet werden müssen. Die erfindungsgemäße magnetische Vorspannung erlaubt somit bei geringer Bauhöhe eine Optimierung der Laufeigenschaften.

Es hat sich herausgestellt, daß es für die magnetische Vorspannung ausreicht, lediglich einen geschlossenen Ring oder mindestens ein Ringsegment aus weichmagnetischem, insbesondere aus ferromagnetischem Material auf der Statorplatte anzubringen, Über die Breite des Vorspannungsringes oder des Ringsegmentes läßt sich die Stärke der magnetischen Vorspannung ohne Änderung der Bauhöhe einstellen, so daß eine Anpassung an die Geometrie der Läuferscheibe sowie der verwendeten Lagerung möglich ist. Unnötig große Lagerbelastungen werden somit vermieden, wodurch die Lebensdauer des Motors deutlich erhöht werden kann.

Vorzugsweise ist die radiale Breite der Vorspannungseinrichtung ≤ der entsprechenden Breite des oder der Spulenfenster.

Durch die Anordnung mindestens eines Abschnittes der Vorspannungseinrichtung in axialer Richtung unterhalb des Spulenfensters der Spulen, worunter der innere Bereich der Spulen verstanden wird, wo die magnetischen Feldlinien parallel zur Spulenachse verlaufen, trägt der magnetische Vorspannungskreis auch zur Drehmomenterzeugung bei.

Vorteilhaft weist die Vorspannungseinrichtung ein Material mit hohem ohmschen Widerstand auf, wodurch Wirbelströme vermieden werden.

Dadurch daß die Vorspannungeinrichtung auf der Statorplatte, insbesondere auf der Oberseite der Statorplatte angeordnet ist, ist zwischen der Vorspannungseinrichtung und dem Spulenfenster kein Gehäuse oder Statorbauteil vorhanden, was das magnetische Feld beeinträchtigen könnte. Dies bietet den Vorteil, daß das Statormaterial frei wählbar ist.

Die Läuferscheibe kann gemäß einer weiteren Ausführungsform einen Rückschlußring tragen, der sich unterhalb der Spulen erstreckt. In diesem Fall ist die Vorspannungseinrichtung derart angeordnet, daß sie in radialer Richtung dem Rückschlußring gegenüberliegt. Durch die Anordnung der Vorspannungseinrichtung unterhalb des Spulenfensters bildet die Vorspannungseinrichtung einen Teil des magnetischen Rückschlußes und hierdurch werden sämtliche magnetischen Feldlinien vollständig zur Drehmomenterzeugung genutzt.

Hierzu trägt es auch vorteilhaft bei, daß die Vorspannungseinrichtung eine Querschnittskontur aufweist, die die magnetischen Feldlinien vom Rückschlußring zum Spulenfenster führt.

Vorzugsweise verbreitert sich die Vorspannungseinrichtung in Richtung Spulenfenster. Vorteilhaft ist beispielsweise eine gestufte Querschnittskontur, die gleichzeitg eine Verzahnung mit der Statorplatte ermöglicht.

Ein weiterer Vorteil besteht darin, daß das Material der Statorplatte frei wählbar ist, weil es nicht am magnetischen Rückschluß teilnehmen muß. Zur Gewichtsreduzierung des Motors können daher auch leichte Materialien zum Einsatz kommen.

Vorzugsweise besteht die Statorplatte aus unmagnetischem, vorzugsweise aus diamagnetischem Material. Dies gilt auch für die Lagerung der Läuferscheibe. Es wird dadurch vermieden, daß Feldlinien über die Lagerstelle verlaufen, was die Laufruhe beinträchtigen würde. Unter unmagnetischem Material wird hier ein Material verstanden, das weder ein weich- noch ein hartmagnetisches Material ist.

Die Statorplatte muß nur so gestaltet sein, daß beispielsweise der Vorspannungsring sicher gehalten wird. Dies trägt ebenfalls zu einer kompakten Bauweise bei.

Eine beispielhafte Ausführungsform der Erfindung wird nachfolgend anhand der Zeichnungen näher erläutert.

### Es zeigen:

- Figur 1: einen vertikalen Schnitt durch einen Scheibenläufermotor,
- Figur 2: einen vertikalen Schnitt durch einen Scheibenläufermotor gemäß einer weiteren Ausführungsform,
- Figur 3: eine vergrößerte Darstellung des linken Teils einer Schnittdarstellung einer im Vergleich zu Figur 2 geänderten Ausführungsform zur Erläuterung der magnetischen Kreise,
- Figur 4: eine Draufsicht auf die schematisch dargestellte Spulenanordnung und
- Figuren 5-13: die Montage des in Fig. 2 gezeigten Scheibenläufermotors.

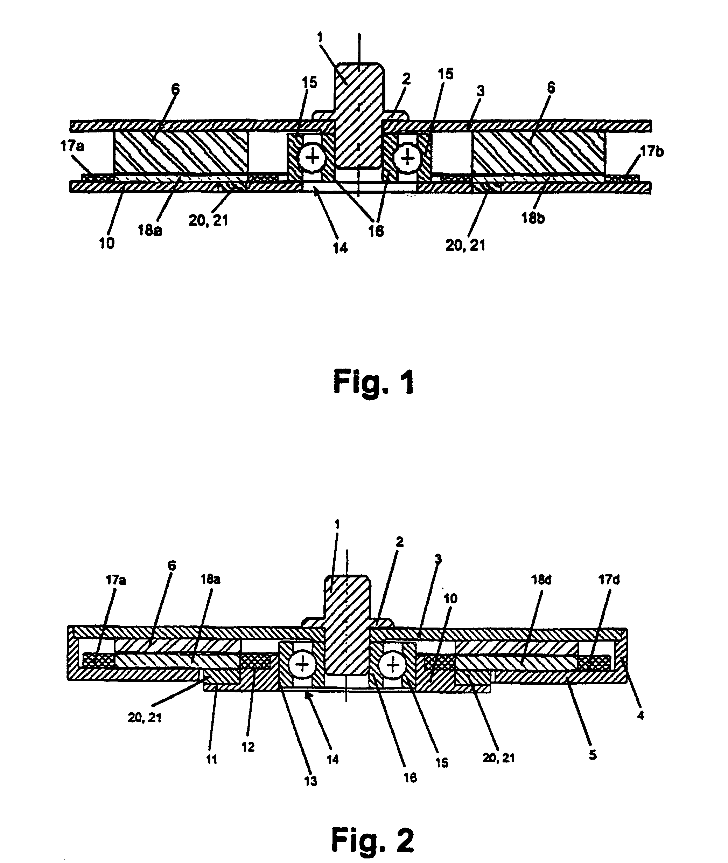

In der Figur 1 ist ein vertikaler Schnitt durch einen Scheibenläufermotor dargestellt. Der Rotor umfaßt eine Welle 1, die in eine Läuferscheibe 3 gesteckt ist und mit ihrem Bund 2 an der Läuferscheibe 3 befestigt ist. An der Unterseite der Läuferscheibe 3 ist ein aus Permanentmagneten wechselnder Polarität gebildeter Permanentmagnetring 6 angeordnet.

Der Stator umfaßt eine Statorplatte 10, auf der der Außenring 15 eines handelsüblichen Kugellagers 14 befestigt ist. Der Innenring 16 des Kugellagers 14 liegt an der Welle 1 an. Auf der Oberseite 12 der Statorplatte 10 sind Flachspulen 17a und 17b befestigt, wobei die Anordnung der Spulen 17a und 17b so gewählt ist, daß die Spulenfenster 18a,b die durch den Innenraum innerhalb der Spulenwicklungen gebildet werden, unterhalb des Permanentmagnetrings 6 angeordnet sind, Die Flachspulen 17a,b und die Statorplatte 10 können auch in einem einstückigen Bauteil integriert sein.

In die Statorplatte 10 ist eine Vorspannungseinrichtung 20 in Form eines Vorspannungsringes 21 eingelassen. Die Anordnung des Vorspannungsrings 21 ist so gewählt, daß er sich in axialer Richtung unterhalb der Spulenfenster 18a, 18b der Spulen 17a, 17b mit einer Größe ≤ dem Spulenfenster befindet. Dadurch tragen der Vorspannungsring 21 bzw. die magnetischen Feldlinien zur Drehmomenterzeugung bei.

Die Bauhöhe des Scheibenläufermotors ist gering und wird im wesentlichen durch die Höhe des Kugellagers 14 definiert.

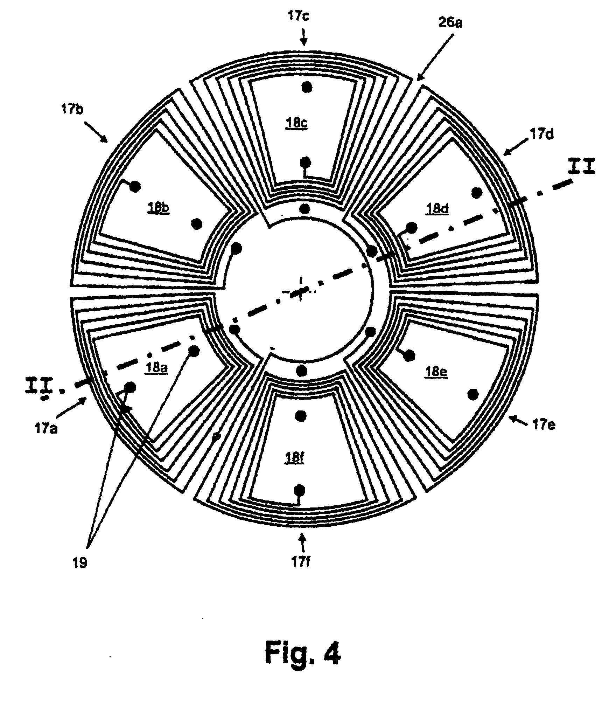

In der Figur 2 ist ein Scheibenläufermotor mit Rückschluß dargestellt. Am Außenumfang der Läuferscheibe 3 ist eine sich nach unten erstreckende Ringschürze 4 befestigt, die einen Rückschlußring 5 trägt. Die Statorplatte 10 weist eine zentrale Bohrung 13 auf, die das Kugellager 14 aufnimmt, wobei der Außenring 15 unverrückbar in der Bohrung 13 gehalten ist. Auf der Oberseite 12 der Statorplatte 10 sind Flachspulen 17a und d befestigt, die sich in den Zwischenraum zwischen dem Rückschlußring 5 und der Läuferscheibe 3 erstrecken. Die in Fig. 2 dargestellte Spulenanordnung mit den Flachspulen 17a und d und den zugehörigen Spulenfenstern 18a und d entspricht einem Schnitt durch die schematisch in Fig. 4 dargestellte Spulenanordnung entlang der Schnittlinie II-II. Am äußeren Rand besitzt die Statorplatte 10 eine ringförmige Stufe 11, in der der Vorspannungsring aus ferromagnetischem Material befestigt ist. Die Anordnung des Vorspannungsrings 21 ist so gewählt, daß er in radialer Richtung dem Rückschlußring 5 gegenüberliegt. Dadurch, daß die Statorplatte 10 nicht am magnetischen Rückschluß teilnimmt, ist der Durchmesser der Statorplatte 10 nur so groß, wie der Außendurchmesser des Vorspannungsringes 21. Das Material der Statorplatte 10 ist frei wählbar.

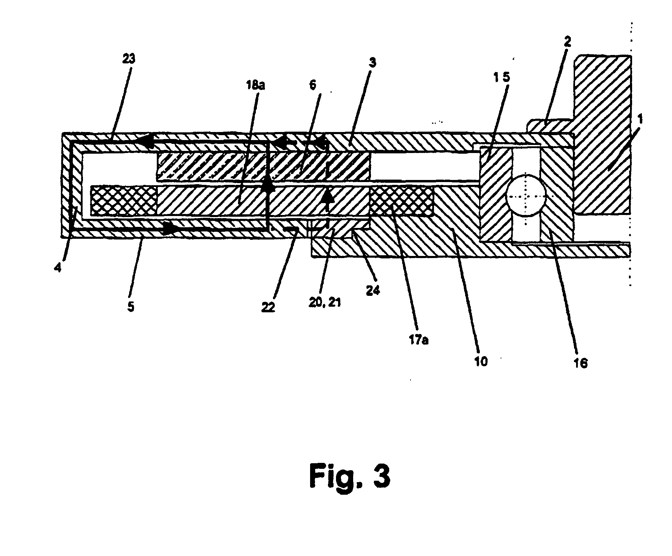

In der Figur 3 ist der linke Teil einer im Vergleich zu Figur 2 geänderten Ausführungsform eines Vertikalschnitts durch einen Scheibenläufermotor vergrößert dargestellt. Der magnetische Rückschluß ist schematisch durch den mit Pfeilen versehenen geschlossenen Kreis 23 (sog. Hauptkreis) und den mit gestrichelter Linie dargestellten Vorspannungskreis 22 dargestellt. Der Hautpkreis 23 verläuft durch die Läuferscheibe 3, die Ringschürze 4, den Rückschlußring 5 und durch das Spulenfenster 18a der Spule 17a.

Die magnetischen Feldlinien des Vorspannungskreises 22 verlaufen auf Grund der erfindungsgemäßen Anordnung des Vorspannungsringes 21 ebenfalls durch das Spulenfenster 18a, so daß dieser magnetische Vorspannungskreis 22 zur Drehmomenterzeugung beiträgt. Ferner wird durch diese erfindungsgemäße Anordnung des Vorspannungskreises 22 als Teil des magnetischen Rückschlußes erreicht, daß die magnetische Vorspannung unabhängig vom magnetischen Rückschluß und unabhängig vom Gesamtdrehmoment des Scheibenläufermotors einstellbar ist, indem die Breite des Vorspannungsring 21 im Spulenfenster 18a variiert wird. Die Querschnittskontur des Vorspannungsringes 21 ist zur Umlenkung der magnetischen Feldlinien zum Spulenfenster 18a ausgebildet und besitzt dementsprechend eine Stufe 24. Dadurch verbreitet sich der Vorspannungsring 21 in Richtung Spulenfenster 18a, wobei gleichzeitig eine Verzahnung zum besseren Halt auf der Statorplatte 10 gebildet wird.

Die magnetische Vorspannung bewirkt, daß die Läuferscheibe 3 in Richtung Statorplatte 10 angezogen wird, wodurch der Innenring 16 des Kugellagers 14 nach unten gezogen wird. Da der Außenring 15 unverrückbar auf der Statorplatte 10 gehalten ist, wird ein eventuell vorhandenes axiales Spiel des Kugellagers 14 eliminiert.

### Ausführungsbeispiel

Das Ausführungsbeispiel bezieht sich auf eine Bauform, wie sie in den Fign. 2 und 3 schematisch dargestellt ist. Der Außendurchmesser des Scheibenläufermotors beträgt 12,8 mm und die Höhe 1,4 mm.

Der Motor weist eine Drehmomentkonstante von 0,40 µNm/mA auf.
Der Motor ist ohne weiteres einsetzbar für Umdrehungsgeschwindigkeiten von bis zu 20.000 rpm bei gleichzeitig hoher Laufgüte.

Aufgrund des Designs wird das Kugellager nicht vom magnetischen Feld beeinflußt. Durch die magnetische Vorspannung wird eine anziehende Kraft im mN-Bereich ausgeübt.

Die Herstellung des Permanentmagnetrings erfolgt durch Mikrospritzgießen oder Formpressen von einem NdFeB-Pulver, das einen Kunststoff als Binder enthält.
Die Dicke des Magnetrings liegt bei ca. 300 µm.
Der Magnetring ist derart axial aufmagnetisiert, daß er auf der Stirnfläche 8-polig ist, wodurch 4 Polpaare erhalten werden.

Miniaturisierte Flachspulen werden mittels UV-Tiefenlithographie und anschließender galvanischer Abscheidung hergestellt.
Die Flachspulen bestehen aus zwei übereinanderliegenden, durch eine Polyimid-Folie als Träger voneinander getrennten Leiterbahnen. Von den 6 Flachspulen sind jeweils zwei radial gegenüberliegende Spulen in Reihe geschaltet.
Die Höhe der Flachspulen beträgt etwa 250 µm.

Alternativ werden die Spulen als mehrlagige Printed-Circuit-Board (PCB) in Mikrofeinstleitertechnik hergestellt.

Der Luftspalt zwischen Spulen und den rotierenden Motorteilen beträgt nur etwa 80 µm.

Die Ansteuerung erfolgt mit einem 3-Phasen-Rechteck-Signal, das nach einem weiteren Ausführungsbeispiel mit einer auf einer den Scheibenläufermotor tragenden Platine integrierten digitalen Ansteuereinheit generiert wird.

Für einzelne Teile, wie Läuferscheibe und Rückschlußring, wird als weichrnagnetisches Material FeSi verwendet. Die Gestaltung der Teile ermöglicht eine preiswerte Massenfertigung, beispielsweise mittels Stanzen und Tiefziehen. Das Zusammenfügen der einzelnen Komponenten erfolgt auf einer Montageplattform, wobei nur Translationsbewegungen bei nur einer Fügerichtung ausgerührt werden.

In der Figur 4 ist das Design der Flachspulen 17a-f dargestellt. Die Spulen 17a-f werden durch übereinanderliegende Folien 26 mit Leiterbahnen gebildet, wobei die Leiterbahnen der einzelnen Folien durch die Kontaktierungspunkte 19, von denen lediglich zwei gekennzeichnet werden, miteinander verbunden werden. Jeweils radial gegenüberliegende Spulen werden in Reihe geschaltet, so daß sich eine dreisträngige Motorkonfiguration ergibt.

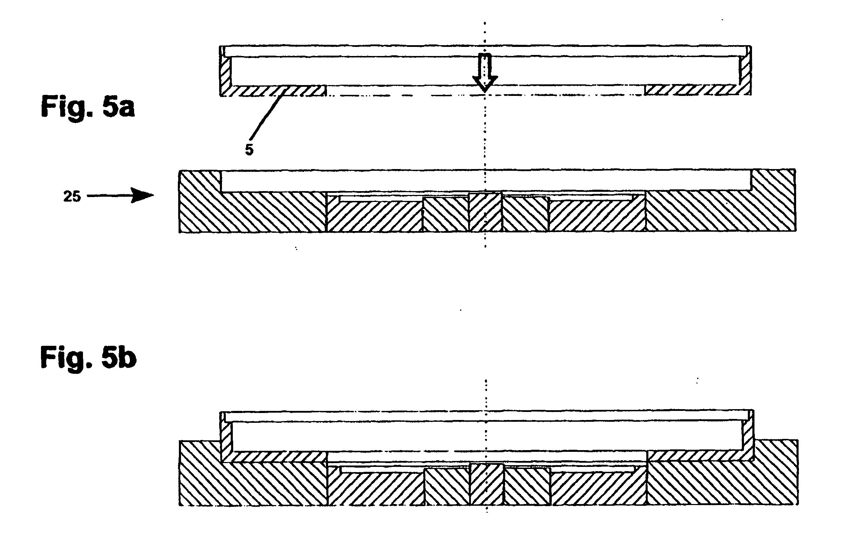

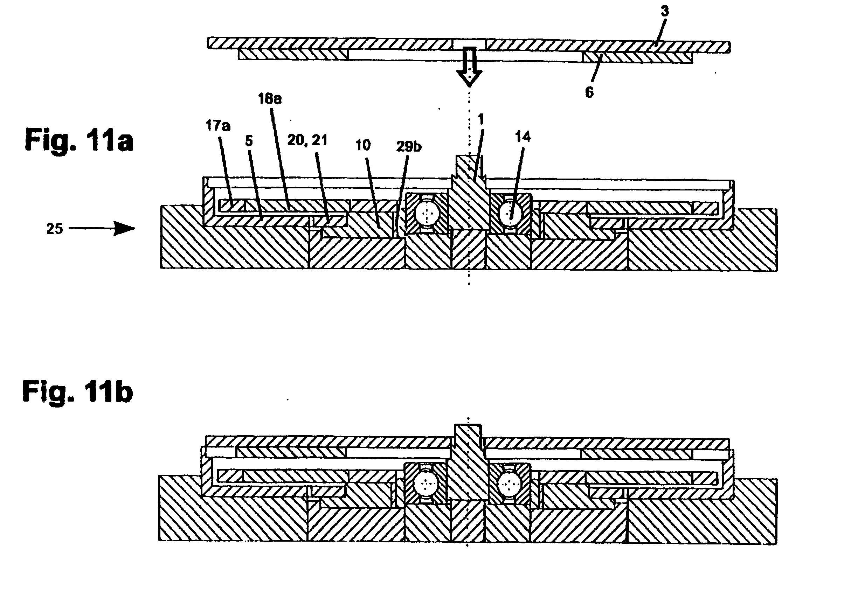

In den Figuren 5-13 wird eine mögliche Montage des in der Figur 2 gezeigten Scheibenläufermotors dargestellt, wobei jeweils die Figur a den Zustand vor und die Figur b den Zustand nach dem Hinzufügen eines weiteren Bauteils zeigt.

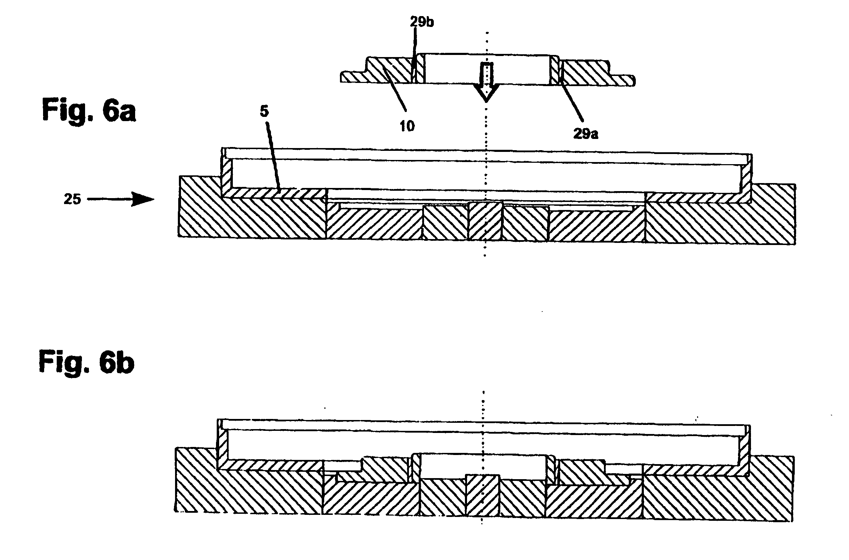

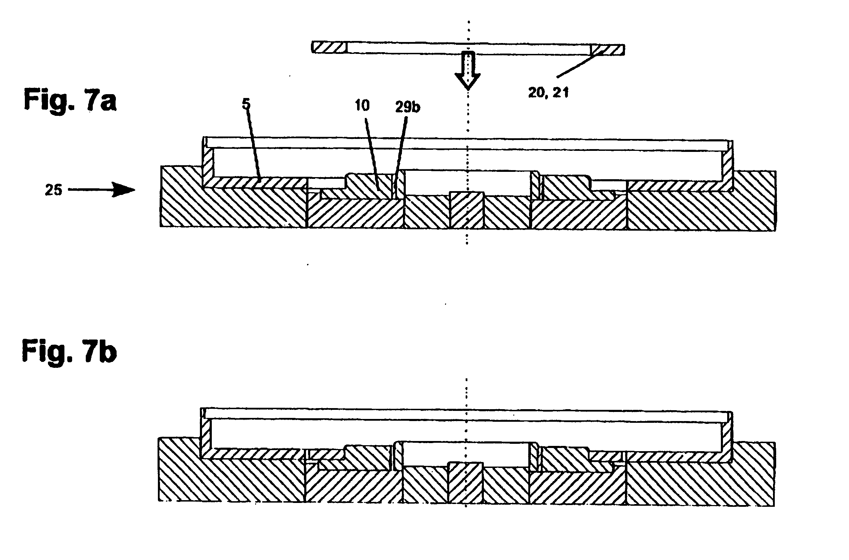

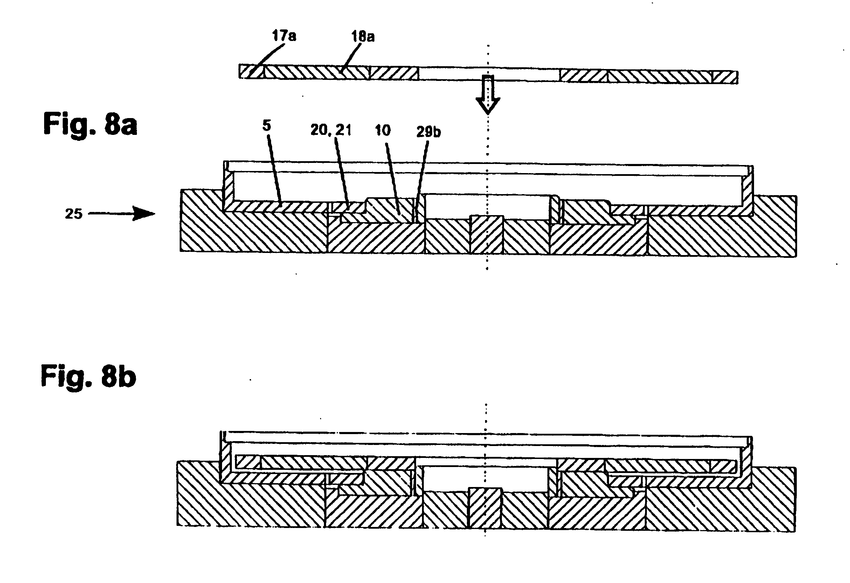

Für die Montage wird eine Montageplatte 25 benötigt, in die die einzelnen Bauteile eingesetzt werden. In der Figur 5a wird zunächst der Rückschlußring 5 in die Montageplatte 25 eingesetzt. Danach folgt die Statorplatte 10 (Figuren 6a und b) sowie das Einsetzen des Vorspannungsrings 21 in die Statorplatte 10 (Fig. 7a,b). Im nächsten Schritt (Figuren 8a und b) werden die Spulen 17a-f eingelegt. Die Spulen 17a-f werden anschließend mechanisch und elektrisch mit den nach außen führenden, in der Statorplatte 10 befindlichen Kontaktstiften 29a,b verbunden.

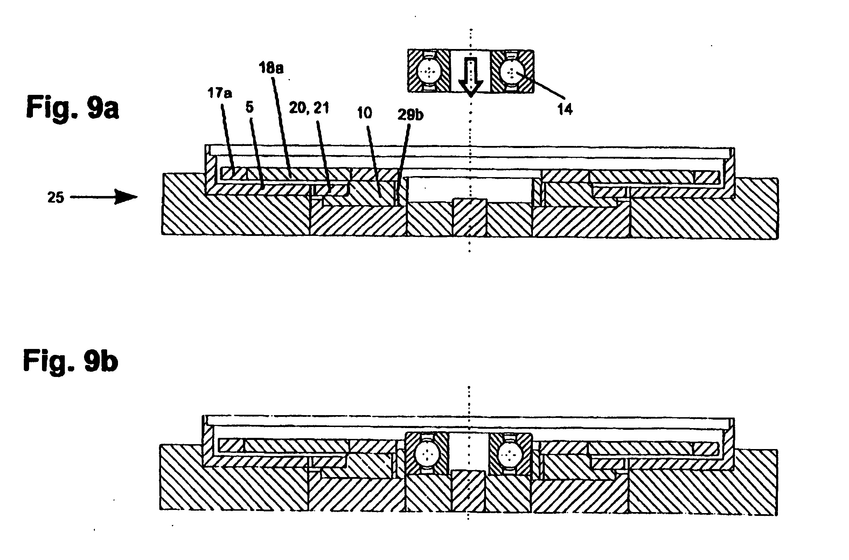

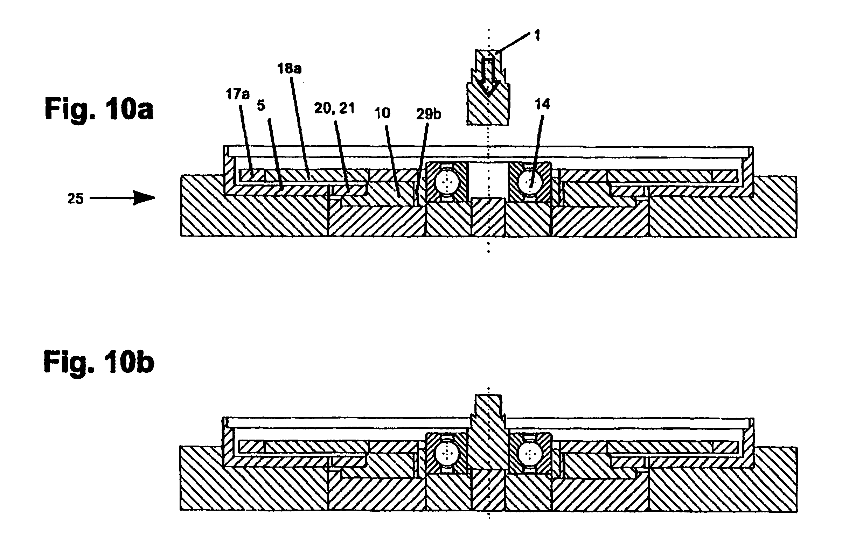

Anschließend wird das Kugellager 14 eingepreßt (Figuren 9a und 9b). In einem weiteren Schritt wird die Welle 1 eingesetzt (Figuren 10a und 10b) und auf der Welle die Läuferscheibe 3 mit dem Permanentmagnetring 6 aufgesetzt (11a und b).

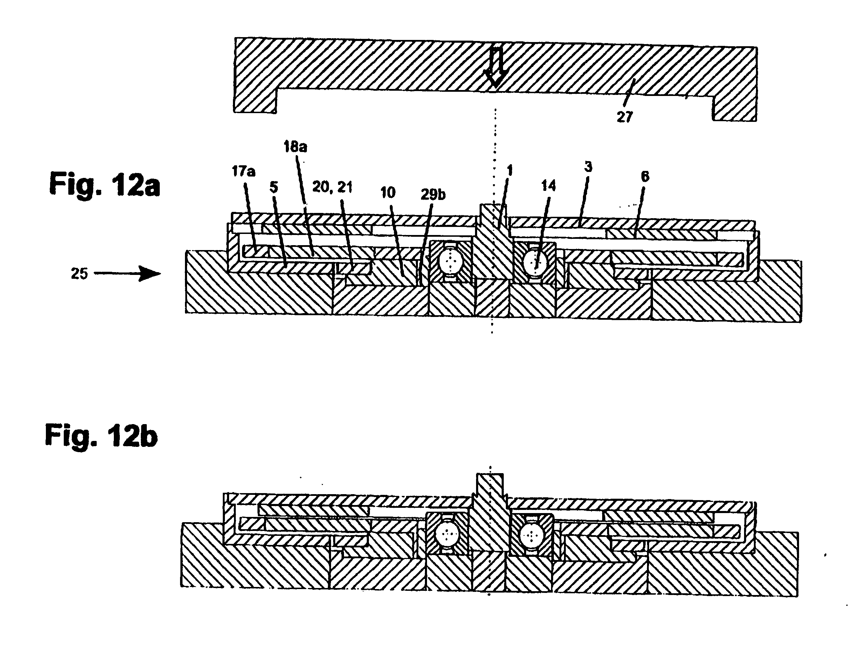

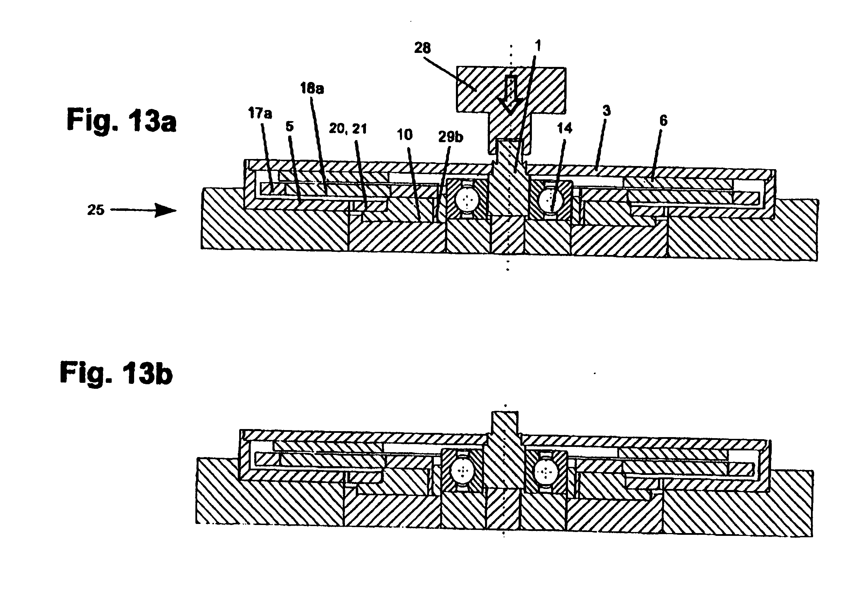

Die Figuren 12a und 12b zeigen das Einpressen der Läuferscheibe 3 mittels eines Preßstempels 27. Der letzte Vorgang beinhaltet das Vernieten der Läuferscheibe mittels eines Nietstempels 28 (Figuren 13a und 13b).

### Bezugszeichen:

- 1: Welle
- 2: Bund
- 3: Läuferscheibe
- 4: Ringschürze
- 5: Rückschlußring
- 6: Permanentinagnetring
- 10: Statorplatte
- 11: ringförmige Stufe
- 12: Oberseite
- 13: zentrale Bohrung
- 14: Kugellager
- 15: Außenring
- 16: Innenring
- 17a-f: Spule
- 18a-f: Spulenfenster
- 19: Kontaktierungspunkt
- 20: Vorspannungseinrichtung
- 21: Vorspannungsring
- 22: magnetischer Vorspannungskreis
- 23: magnetischer Hauptkreis
- 24: Stufe
- 25: Montageplatte
- 26: Folie
- 27: Preßstempel
- 28: Nietstempel
- 29a,b: Kontaktstift

## Patentansprüche

1. Scheibenläufermotor mit einer mit Permanentmagneten (6) versehenen, drehbar gelagerten Läuferscheibe (3) und mit einem Stator, der eine Statorplatte (10) umfaßt, die mit Spulen (17a,17b) bestückt ist, **dadurch gekennzeichnet,**
**daß** auf der Statorplatte (10) eine ringförmige Vorspannungseinrichtung (20) aus weichmagnetischem Material derart konzentrisch angeordnet ist, daß sich mindestens ein Abschnitt der Vorspannungseinrichtung in axialer Richtung unterhalb des Spulenfensters (18a, 18b) der Spulen (17a, 17b) befindet.

2. Scheibenläufermotor nach Anspruch 1, **dadurch gekennzeichnet, daß** die Statorplatte (10) aus unmagnetischem Material besteht.

3. Scheibenläufermotor nach Anspruch 1 oder 2, **dadurch gekennzeichnet, daß** die ringförmige Vorspannungseinrichtung (20) aus einem geschlossenen Vorspannungsring (21) besteht.

4. Scheibenläufermotor nach Anspruch 1 oder 2, **dadurch gekennzeichnet, daß** die ringförmige Vorspannungseinrichtung (20) aus mindestens einem Ringssegment besteht.

5. Scheibenläufermotor nach einem der Ansprüche 1 bis 4, **dadurch gekennzeichnet, daß** die Läuferscheibe (3) einen Rückschlußring (5) trägt, dem die ringförmige Vorspannungseinrichtung (20) in radialer Richtung gegenüberliegt.

6. Scheibenläufermotor nach Anspruch 5, **dadurch gekennzeichnet, daß** die Vorspannungseinrichtung (20) eine Querschnittskontur aufweist, die die magnetischen Feldlinien vom Rückschlußring (5) zum Spulenfenster (18a,b) führt.

7. Scheibenläufermotor nach Anspruch 6, **dadurch gekennzeichnet, daß** der Querschnitt der Vorspannungseinrichtung (20) sich zum Spulenfenster (18a,b) hin verbreitert.

8. Scheibenläufermotor nach Anspruch 6 oder 7, **dadurch gekennzeichnet, daß** die Vorspannungseinrichtung (20) eine gestufte Querschnittskontur aufweist.

## Revendications

1. Moteur à rotor à disque avec disque de rotor (3) muni d'aimants permanents (6) et logé de manière libre en rotation et d'un stator qui comprend une plaque de rotor (10) munie de bobines (17a,17b), **caractérisé en ce que**, sur la plaque du stator (10), un dispositif de polarisation annulaire (20) en matériau magnétique doux est disposé de manière concentrique de telle sorte qu'au moins une partie du dispositif de polarisation se trouve, dans le sens axial, en dessous de la fenêtre de bobine (18a,18b) des bobines (17a,17b).

2. Moteur à rotor à disque selon la revendication 1, **caractérisé en ce que** la plaque de rotor (10) est constituée d'un matériau non magnétique.

3. Moteur à rotor à disque selon la revendication 1 ou 2, **caractérisé en ce que** le dispositif de polarisation annulaire (20) est constitué d'anneau de polarisation fermé (21).

4. Moteur à rotor à disque selon la revendication 1 ou 2, **caractérisé en ce que** le dispositif de polarisation annulaire (20) est constitué d'au moins un segment d'anneau.

5. Moteur à rotor à disque selon l'une des revendications 1 à 4, **caractérisé en ce que** le disque du rotor (3) comporte un anneau de circuit de retour (5) en face du dispositif de polarisation annulaire (20) dans le sens radial.

6. Moteur à rotor à disque selon la revendication 5, **caractérisé en ce que** le dispositif de polarisation (20) présente un contour de section qui guide les lignes de champ magnétique de l'anneau de circuit de retour (5) vers la fenêtre de bobine (18a,b).

7. Moteur à rotor à disque selon la revendication 6, **caractérisé en ce que** la section du dispositif de polarisation (20) s'élargit en direction de la fenêtre de bobine (18a,b).

8. Moteur à rotor à disque selon la revendication 6 ou 7, **caractérisé en ce que** le dispositif de polarisation (20) présente un contour de section échelonné.

## Claims

1. Disc armature motor with an armature disc (3) which is rotatably mounted and provided with permanent magnets (6) and with a stator which comprises a stator plate (10) equipped with coils (17a, 17b), **characterised in that** an annular pretensioning device (20) made from soft-magnetic material is disposed concentrically on the stator plate (10) in such a way that at least a section of the pretensioning device is located below the coil window (18a, 18b) of the coils (17a, 17b) in the axial direction.

2. Disc armature motor as claimed in Claim 1, **characterised in that** the stator plate (10) is made from non-magnetic material.

3. Disc armature motor as claimed in Claim 1 or 2, **characterised in that** the annular pretensioning device (20) consists of a closed pretensioning ring (21).

4. Disc armature motor as claimed in Claim 1 or 2, **characterised in that** the annular pretensioning device (20) consists of at least one ring segment.

5. Disc armature motor as claimed in one of Claims 1 to 4, **characterised in that** the armature disc (3) bears a flux-return ring (5), the annular prestressing device (20) lying opposite the said flux-return ring in the radial direction.

6. Disc armature motor as claimed in Claim 5, **characterised in that** the pretensioning device (20) has a cross-sectional contour which guides the magnetic flux lines from the flux-return ring (5) to the coil window (18a,b).

7. Disc armature motor as claimed in Claim 6, **characterised in that** the cross-section of the pretensioning device (20) widens in the direction of the coil window (18a,b).

8. Disc armature motor as claimed in Claim 6 or 7, **characterised in that** the pretensioning device (20) has a stepped cross-sectional contour.
